# EUROPÄISCHE PATENTSCHRIFT

(11) **EP 2 449 870 B1**
(45) Veröffentlichungstag und Bekanntmachung des Hinweises auf die Patenterteilung: **16.10.2013**
(21) Anmeldenummer: 11008738.4
(22) Anmeldetag: 02.11.2011
(51) Int. Cl.: A01C 7/20, A01C 9/00, A01B 63/00

(54) **Legemaschine für Kartoffeln**
Potato planter
Machine pour planter les pommes de terre

(30) Priorität: 05.11.2010 DE 102010050614
(43) Veröffentlichungstag der Anmeldung: 09.05.2012
(73) Patentinhaber: Grimme Landmaschinenfabrik GmbH & Co. KG, 49401 Damme (DE)
(72) Erfinder: Kalverkamp, Klemens, 49401 Damme (DE)
(74) Vertreter: Pott, Ulrich

(56) Entgegenhaltungen:
- EP-A1- 2 158 800
- WO-A1-91/11899
- GB-A- 825 378

## Beschreibung

Die Erfindung betrifft eine Legemaschine für Kartoffeln mit einer Verlegeeinheit gemäß dem Oberbegriff des Anspruchs 1.

Legemaschinen bzw. Kartoffellegevorrichtungen sind in unterschiedlichen Ausführungen bekannt, wobei neben einem Vorratsbehälter und dem die Knollen vereinzelnden Legeaggregat weitere den Boden bearbeitende Bauteile, insbesondere ein Furchenzieher und ein nachfolgend wirksamer Dammformer, eine an einem Tragrahmen befindliche Einheit bilden. Diese Einheit kann dabei in Form einer "Hubkonstruktion" so angepasst werden, dass diese an einer Dreipunkthalterung eines Schleppers weitgehend freitragend abgestützt wird und so insgesamt verlagert werden kann. In einer zweiten Ausführung ist eine "Zug-Konstruktion" vorgesehen, bei der nur die Zugvorrichtung des Schleppers genutzt wird und diese Legeeinheit dabei zusätzlich über jeweilige Stützräder bodenseitig geführt werden muss (DE 10 30 091 B).

Bei einer Kartoffellegevorrichtung gemäß NL 1020747 wird eine auf Stützrädern gezogene Konstruktion mit schwenkbarem Furchenzieher vorgeschlagen. Dabei sind die Furchenzieher asymmetrisch ausgeführt, wirken mit jeweiligen an einem federbelasteten Hebel befindlichen Dammformscheiben zusammen, und eine Parallelogramm-Lenkanordnung ist mit einem zweiten rückseitigen Dammformer verbunden. Bei einer Konstruktion gemäß GB 2048034 A ist ein schwenkbarer Furchenzieher an einem Tragrahmen angeordnet, wobei die nachfolgenden Dammformelemente unabhängig von dessen Schwenkbewegung sind, und gemäß BE 493 480 wird ein Rahmen mit Furchenzieher und Dammformblechen vorgeschlagen.

Eine verbesserte Legevorrichtung gemäß NL 1014692 weist eine auf Stützrädern bewegliche Konstruktion auf, die mit einem einstellbaren Furchenzieher versehen ist, der über eine Gestängeverbindung am Tragrahmen so abgestützt ist, dass variable Höhenverstellungen möglich sind. Unabhängig von diesem Gestängesystem sind zur Dammformung mehrere Bauteile in Form von Deckscheiben wirksam, wobei diese im Nahbereich des Furchenziehers jedoch nicht einstellbar sind. Vielmehr sind zusätzlich zu den vorderen Deckscheiben jeweilige in Fahrtrichtung hinter den Stützrädern am Tragrahmen gehaltene Dammformer vorgesehen. Die Kupplung zwischen den Legemitteln und dieser Gruppe von Dammformungsmitteln ist so ausgeführt, dass diese gegenüber einem geformten Erddamm eine feste Position haben und andererseits mittels eines vorderseitigen Parallelogramm-Mechanismus die vertikale Distanz des Furchenziehers beeinflusst werden kann.

Die Kartoffellegemaschine gemäß DE 26 15 285 weist einen Furchenzieher mit vorgeordneter Tastrolle auf, in DE 18 33 436 ist ein Furchenzieher mit Seitenscheiben vorgesehen - die auch eine Ausführung in DE 28 08 882 auszeichnet - und in DE 20 29 015 ist der Bodenräder aufweisende Stützrahmen mit einem voreinstellbaren Furchenzieher versehen.

Gemäß DE 10 2007 030 448 A1 ist eine Legemaschine für Kartoffeln vorgeschlagen, bei der eine verstellbare Konstruktion gezeigt wird. Dabei sind zumindest der Furchenzieher und das zumindest eine Zudeckelement als gemeinsam verstellbare Abdeckbaugruppe wirksam. Mit dieser Bauteilkombination wird erreicht, dass bisher vorgesehene Tasträder o. dgl. Führungsteile zur Tiefen- bzw. Höhenanpassung entbehrlich werden und mittels der gesteuert verlagerbaren Abdeckbaugruppe eine vorgesehene Knollentiefe auch bei sich ändernden Bodenbedingungen konstant gewährleistet wird.

Eine weitere Legemaschine für Kartoffeln mit den Merkmalen des Oberbegriffes des Anspruchs 1 ist aus der EP 2 158 800 bekannt.

Die Erfindung befasst sich mit dem Problem, eine Kartoffellegevorrichtung zu schaffen, deren im Bereich der Furche bzw. des Dammes wirkende Abdeckbaugruppe mit geringem technischem Aufwand variablere Einstellungen der Legetiefe ermöglicht, die Furchenzieher gegen Überbelastungen geschützt sind und im beengten Einbauraum unterhalb der Legeaggregate mittels mechanischer und/oder sensorischer Steuerung(en) auf wechselnde Boden- und Arbeitsbedingungen optimal reagiert werden kann.

Die Erfindung löst diese Aufgabe durch eine Kartoffellegevorrichtung mit den Merkmalen des Anspruchs 1. Hinsichtlich weiterer Ausgestaltungen wird auf die Ansprüche 2 bis 14 verwiesen.

Die von einem Konzept einer verstellbaren Abdeckbaugruppe für eine Legemaschine gemäß DE 10 2007 030 448 A1 ausgehende Konstruktion ist auf eine für unterschiedliche Tragrahmen-Varianten geeignete Gestaltung gerichtet. Bei der erfindungsgemäß verbesserten Maschine ist einerseits eine auch sensorisch steuerbare Konstanthaltung der Baugruppen in einer verlegeoptimalen Stellung zur Acker- bzw. Bodenoberfläche möglich, und andererseits wird mit einer geänderten Verbindungskonstruktion zwischen dem Dammformblech und dem Furchenzieher - als die an sich bekannte Abdeckeinheit - eine zusätzliche mechanisch wirkende Stell- und Sicherungsfunktion in das System integriert.

Das System dieser verbesserten Abdeckeinheit kann dabei mit einem - sämtliche weitere Bauteile einschließenden - elektronischen Näherungssensor o. dgl. Überwachungseinheit versehen sein. Dabei werden im Bereich eines zur Abdeckeinheit geführten Längstragrohres jeweilige Veränderungen der Winkellage, insbesondere bei verstärktem Einsinken eines Zugfahrzeuges in weichem Boden, erfasst und überwacht. Ausgehend von diesem Messergebnis kann die gesamte Maschinen-Baugruppe so angehoben werden, dass die vorgesehene optimale Lage sämtlicher Funktionsbaugruppen zur Bodenoberfläche hin wieder hergestellt ist.

Das System ist dabei darauf abgestellt, dass für die verlegten Knollen mittels des als Dammformblech ausgebildeten Zudeckelementes eine gleich bleibende Erdüberdeckung erreicht werden soll, wobei die Konstruktion des Dammformbleches bzw. dessen als Halterung vorgesehener Träger gleichzeitig eine "Steuerfunktion" übernehmen kann. Nach Art einer Rückkopplung können Lageveränderungen des Dammformbleches mittels einer mehrgliedrigen Gelenkkette als der Verbinder synchron auf den Furchenzieher übertragen werden; wie dies ähnlich auch bereits in DE 10 2007 030 448 A1 mit hier "starrer" Verbindung möglich ist. Die in dieser bekannten, gattungsbildenden Konstruktion vorgesehene Verbindung von Dammformblech und Furchenzieher ist weitgehend so starr, dass hier Überbelastungen im Bereich des Furchenziehers, beispielsweise beim Auftreffen auf einen Stein, noch nicht vollständig rückwirkungsfrei ausgleichbar sind.

Bei der erfindungsgemäßen Lösung ist deshalb als Verbinder zwischen Dammformblech und Furchenzieher eine von einer "Loslager-Konstruktion" ausgehende Gelenk- und Steuerkette in Form eines speziellen Mehrhebel-Gestänges mit Strebenlenker vorgesehen, mit dem - bei ansonsten auch starr einstellbarer Verbindung - für den Furchenzieher ein zusätzlicher Freiheitsgrad erreicht werden soll. Dazu kann ein im Bereich des Dammformbleches bzw. dessen Träger mit seinem Basisschenkel "lose" aufliegender bzw. geführter Y-förmiger Steuerteil als Verbinder vorgesehen sein, dessen in Fahrtrichtung vordere zwei Spreizschenkel dieses Strebenlenkers mit einem den Furchenzieher gelenkig mit dem Tragrahmen verbindenden Lenkparallelogramm im Bereich eines Querträgers zusammenwirken. Dieses Lenkparallelogramm ist andererseits mit zwei Gelenkpunkten ortsfest zum Tragrahmen hin ausgerichtet.

Durch dieses Lenkparallelogramm bewirkt ein bodenseitig erhöhter Widerstand im Bereich der bodenseitig geführten Bauteile - z.B. ein anliegender Stein am sich vorwärts bewegenden Furchenzieher - eine Verlagerung nach Art einer Schwenk-Schub-Bewegung im Bereich des Y-Steuerteils. Dabei kann dieser Strebenlenker - vorzugsweise durch die lose Auflage seines Basisschenkels im Bereich des hinteren Dammformbleches - eine von diesem unabhängige Ausweichbewegung ausführen, während gleichzeitig der zwischen den Schenkeln des Strebenlenkers und des Lenkparallelogramms "beweglich" gehaltene Furchenzieher angehoben wird.

Nach dieser "Auslenkung" des Furchenziehers wird unter Wirkung der - auf einen entsprechenden Anpress- bzw. Arbeitsdruck - voreingestellten Gestängeteile im Bereich des Y-Steuerteils sowie des Lenkparallelogramms nachfolgend der Basisschenkel bzw. das Y-Steuerteil wieder in die Ausgangslage am "Loslager" des Dammformbleches zurückbewegt, und auch der Furchenzieher gelangt dabei in seine optimale Arbeitsposition.

Diese aus vergleichsweise wenig Bauteilen zusammengesetzte Stütz- und Führungskonstruktion bewirkt geringere Belastungen der Funktionsteile, so dass zusätzlich zu der beschriebenen Steinsicherung am Furchenzieher die Verschleißbelastungen insgesamt gesenkt werden und ungewollte Deformationen von Einzelteilen im Bereich der erfindungsgemäß gesteuerten Abdeckbaugruppe sicher vermieden sind.

Das Mehrhebel-Gestänge mit dem die Spreizschenkel aufweisenden Strebenlenker ist im Bereich der Abdeckbaugruppe mittels eines längsgerichteten Basisschenkels so abgestützt, dass ein vom Tragrahmen zur Abdeckbaugruppe verlaufendes Längstragrohr die "schwimmende" Gebrauchslage des Gestänges vorgibt. Gleichzeitig wirken die vorderen Spreizschenkel mit dem in Arbeitsrichtung vorgelagerten Lenkparallelogramm oberhalb des Furchenziehers im Bereich eines diesen - bzw. in Querrichtung mehrere dieser Bauteile - abstütztenden Querträgers zusammen. Dieser ist seinerseits nur über das bzw. die Lenkparallelogramm(e) mit dem Tragrahmen verbunden, der in Draufsicht mit einem zur Abdeckbaugruppe verlaufenden Hauptlängsträger eine "stabile" T-Struktur bildet, an der sämtliche der vorbeschriebenen Baugruppen in steuerbarer und einstellbarer "Schwimmstellung" (mit den entsprechenden Gelenken) gehalten sind.

Weitere Einzelheiten und vorteilhafte Ausgestaltungen der Erfindung ergeben sich aus der nachfolgenden Beschreibung und der Zeichnung, in der ein Ausführungsbeispiel der erfindungsgemäßen Legemaschine mit Stützvorrichtung veranschaulicht ist. In der Zeichnung zeigen:
- Fig. 1: eine Prinzipdarstellung der an einem Schlepper angeordneten Legevorrichtung mit Tiefenautomatik,
- Fig. 2: eine vergrößerte Einzeldarstellung der Baugruppen im Bereich der Abdeckeinheit mit einem Mehrhebel-Getriebe,
- Fig. 3: eine Einzeldarstellung des Mehrhebel-Getriebes,
- Fig. 4: eine Draufsicht auf die am Tragrahmen befindlichen Bauteile mit Furchenziehern und abgedeckten Dammformblechen, und
- Fig. 5: eine vergrößerte Schnittdarstellung der Bauteile gemäß Fig. 4.

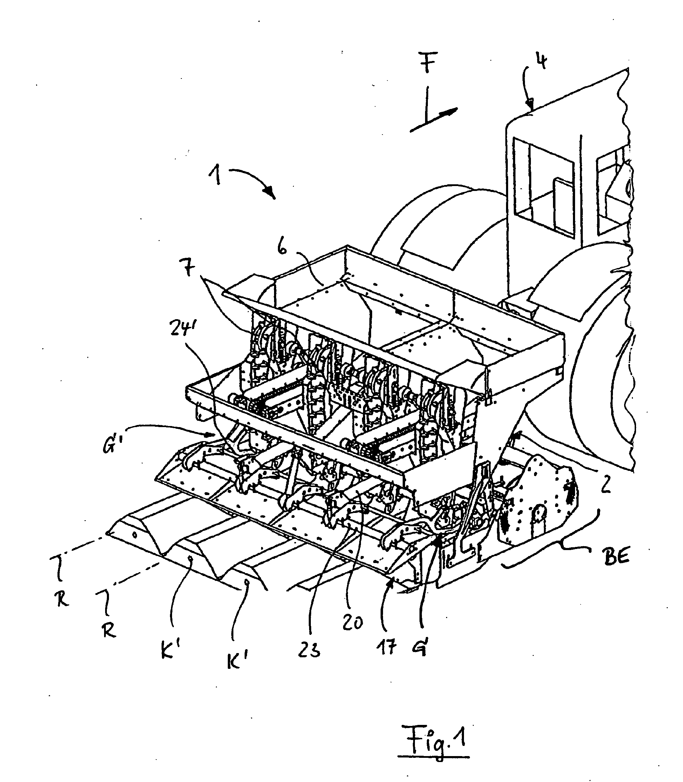

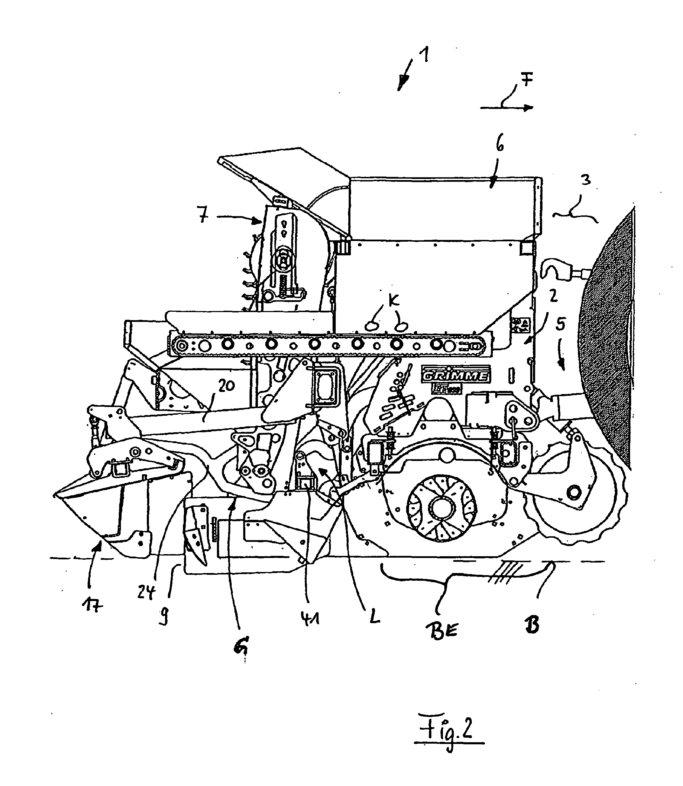

In Fig. 1 ist eine insgesamt mit 1 bezeichnete Legemaschine für Kartoffeln bzw. eine Kartoffellegevorrichtung in einer perspektivischen Rückansicht dargestellt, wobei deren Tragrahmen 2 an einer Dreipunkthalterung 3 (Fig. 2) eines schematisch dargestellten Schleppers 4 abgestützt ist. Mit diesen Grundelementen kann die Legemaschine 1 insgesamt mittels eines nicht näher dargestellten hydraulischen Krafthebers 5 - beispielsweise in Relation zu einer als Ackerfläche oder Bodenebene definierbaren Horizontalebene B - verlagert werden. Dabei ist für einen zumindest einreihigen Legevorgang (Reihen R, Fig. 1) ein mit einem oberen Vorratsbehälter 6 für Knollen K zusammenwirkendes Legeaggregat 7 vorgesehen. Es versteht sich, dass in der praktischen Anwendung mehrere Legeaggregate 7 (Fig. 1) vorgesehen sind.

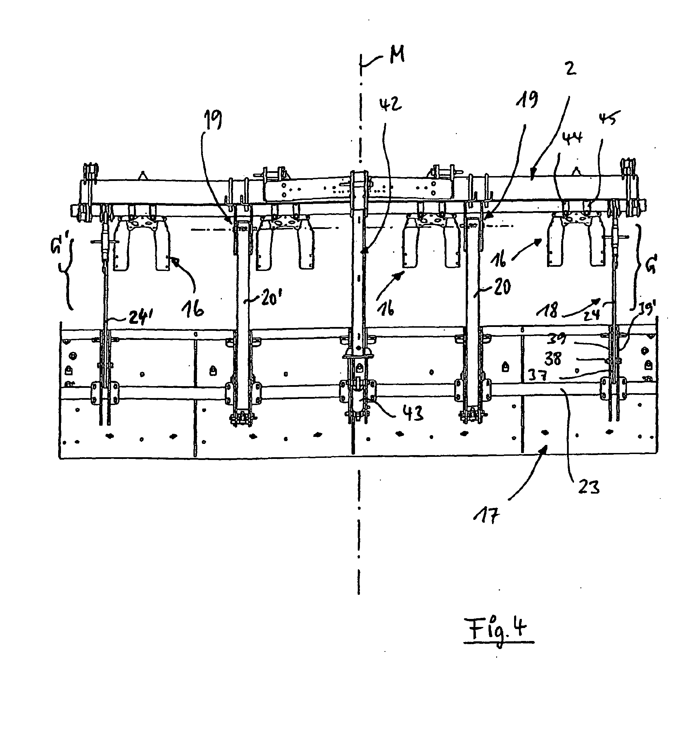

Aus der Seitenansicht gemäß Fig. 2 wird deutlich, dass im Bereich unterhalb des Legeaggregates 7 sowie in Arbeitsrichtung F im wesentlichen hintereinander ein im Ackerboden (bei B) ein Saatbeet 9 für die vereinzelten Knollen K erzeugender Furchenzieher 16 und zumindest ein Ackerboden auf eingelegte Knollen K' (Fig. 1) häufelndes Zudeckelement 17 vorgesehen sind. Diese Konstruktionsbaugruppe kann gemäß DE 10 2007 030 448 A1 so ausgeführt sein, dass der Furchenzieher 16 und das Zudeckelement 17 als gemeinsam verstellbare Abdeckbaugruppe mit einem Verbindungsteil 18 (Fig. 4) ausgebildet sind, um Legetiefe und Dammformung zu optimieren.

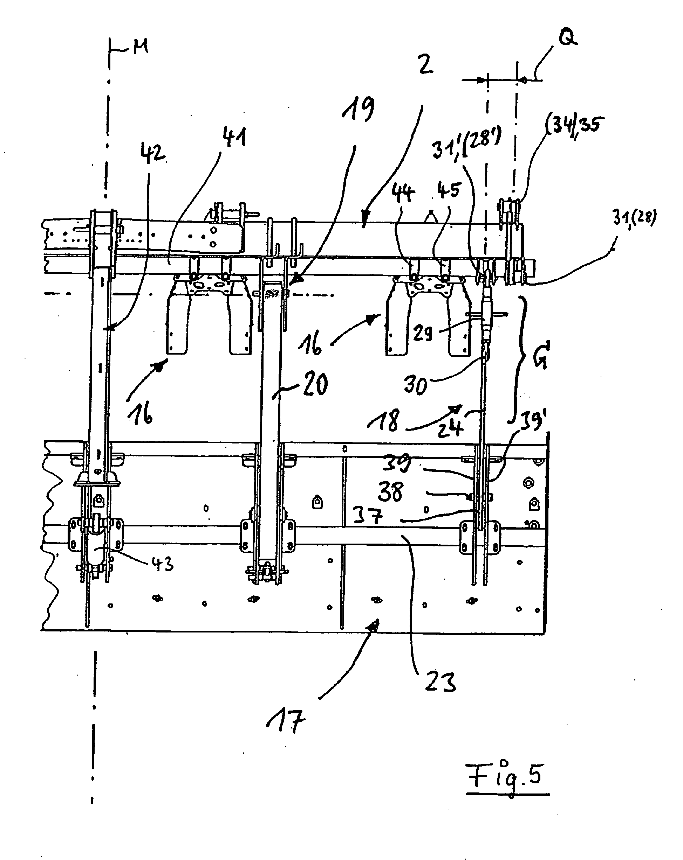

Das Konzept der Legemaschine 1 sieht vor, dass ausgehend vom Tragrahmen 2 zumindest ein an diesem in einem Gelenk 19 (Fig. 4) und zur Abdeckbaugruppe gerichtetes Längstragrohr 20 vorgesehen ist und dieses mit einem sowohl das Zudeckelement 17 als auch den Furchenzieher 16 steuernden Mehrhebel-Gestänge G als das Verbindungsteil 18 zusammenwirkt. Die erfindungsgemäße Verbesserung ist darauf gerichtet, dass das Mehrhebel-Gestänge G, G' einen Strebenlenker 24 aufweist, dessen Endpunkte 28', 30' bildende Spreizschenkel 26, 27 mit einem in Arbeitsrichtung vorgelagerten Lenkparallelogramm L verbunden sind. Diese "Hebel-Paare" sind dabei zentral an einem Querträger 41 so angelenkt, dass für den mit diesem fest durch Halteteile 44, 45 (Fig. 5) verbundenen Furchenzieher 16 eine "schwimmende" (Pfeil T) oder "aushebbare" (Pfeil T') Lage erreicht ist.

Mit dieser Bauteilkombination aus Längstragrohr 20 und das bekannte Verbindungsteil 18 (aus DE 10 2007 030 448 A1) zumindest teilweise ersetzendem Mehrhebel-Gestänge G wird insgesamt eine Verbesserung des Steuerungs-Konzeptes dadurch erreicht, dass die horizontale Lage der Legemaschine 1, insbesondere in Bezug zur Bodenoberfläche B, mittels eines insbesondere am Längstragrohr 20 vorgesehenen Sensors 21 einfacher erfassbar ist. In der dargestellten Ausführung der Legemaschine 1 wird mittels des mit dem Längstragrohr 20 zusammenwirkenden Sensors 21 ein Ausgangssignal erzeugt, das zur Aktivierung eines im Bereich der Dreipunkthalterung 3 vorgesehenen Stellorgans genutzt werden kann und damit sowohl eine Verstellung des Gesamtsystems als auch gezielte Beeinflussungen im Bereich des Mehrhebel-Gestänges G bewirkt werden können. Ebenso ist denkbar, dass ein oder mehrere maschinenintegrierte Stellorgan(e) (nicht dargestellt) durch den zumindest einen Sensor 21 beeinflusst werden.

Aus Fig. 2 wird der Einbauort des Sensors 21 deutlich, wobei diese Positionierung des Sensors 21 in einer vorteilhaften Lage mit Abstand zu bzw. im Bereich außerhalb den/der im Nahbereich des Legeaggregates 7 vorgesehenen Baugruppen erfolgt. Vorteilhaft ist im Bereich des Längstragrohres 20 ein Näherungssensor 22 vorgesehen, mit dem eine jeweilige Winkellage W des schwenkbar am Tragrahmen 2 gehaltenen Längstragrohres 20 erfasst wird. Bei einer Erfassung einer Sollmaß-Abweichung ist mit geringem Aufwand eine Nachstellbewegung im Bereich der Maschine 1 bzw. der gesamten Legebaugruppe ausführbar, wobei aus dem Messsignal auch eine gezielte Beeinflussung im Bereich des Mehrhebel-Gestänges G ableitbar sein kann und hier entsprechend wirksame Stellorgane (nicht dargestellt) in das System integriert werden.

Aus der Draufsicht gemäß Fig. 1 bzw. Fig. 4 wird deutlich, dass der Längsträger 20, 20' zu einem das Zudeckelement 17 erfassenden Träger 23 gerichtet ist und ausgehend von diesem Bereich das zum vorgelagerten Furchenzieher 16 gerichtete Mehrhebel-Gestänge G eine erfindungsgemäß verbesserte Verbindung (allgemein: 18) herstellt.

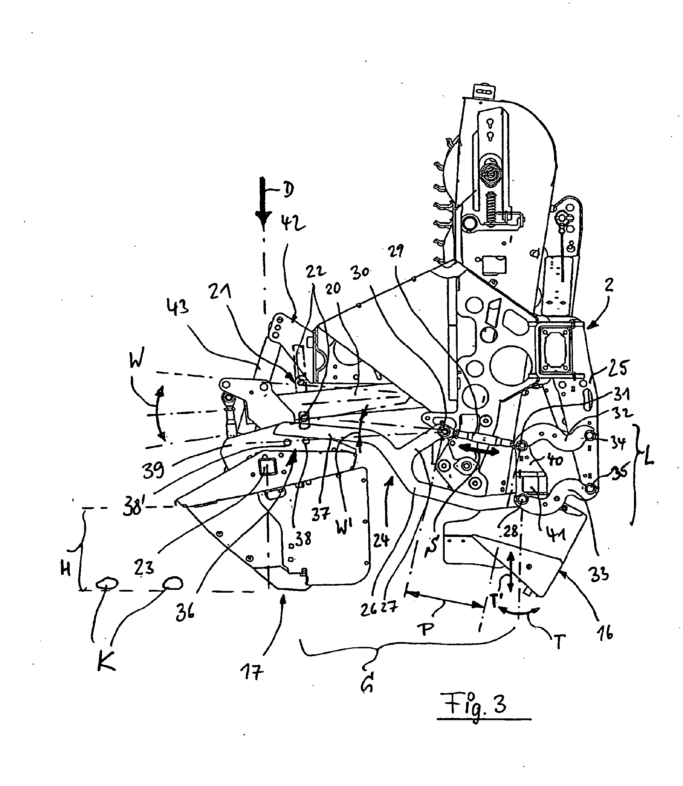

Aus einer Zusammenschau von Fig. 4 mit der Ausschnittsdarstellung gemäß Fig. 3 wird der Aufbau des Mehrhebel-Gestänges G und dessen optimierbare Wirkung deutlich. Dabei ist das Mehrhebel-Gestänge G mit dem vom Zudeckelement 17 ausgehend zum Furchenzieher 16 gerichteten Strebenlenker 24 versehen, dessen in Arbeitsrichtung F vordere zwei Endbereiche (bei 28', 30' - Fig. 5) dem insgesamt mit L bezeichneten Lenkparallelogramm zugeordnet sein können. Ausgehend von dieser zweifachen Verbindung verläuft das Lenkparallelogramm L andererseits zum Tragrahmen 2 hin, wobei dieser mittels eines Tragarms 25 erfasst wird. Mit dieser Konstruktion des Mehrhebel-Gestänge G wird erreicht, dass sowohl die Maschine 1 insgesamt mittels eines am Tragrahmen 2 angreifenden Stellorgans (Dreipunkthalterung 3) auf eine konstante Lage zur Boden- bzw. Ackerfläche B einstellbar ist, als auch zumindest der Furchenzieher 16 - als ein Teil der Abdeckbaugruppe - einzeln bewegt bzw. verlagert werden kann (Pfeile T, T'; Fig. 3).

Aus den zeichnerischen Darstellungen ergibt sich auch, dass das Mehrhebel-Gestänge G ausgehend vom hinteren Verbindungsbereich - des Längstragrohres 20 zum Zudeckelement 17 - mit dem im wesentlichen als Y-förmig verlaufendes Führungs- und Steuerteil ausgebildeten Strebenlenker 24 in einer "Gelenk-Kette" mit mehreren Längstragrohren 20, 20' (Fig. 4) und einem zentralen Hauptlängsträger 42 wirksam ist. Deutlich wird dabei, dass zwei die nach vorn gerichteten Endbereiche 28', 31' (Fig. 5) bildende Spreizschenkel 26, 27 jeweils gelenkig mit den in Arbeitsrichtung F vorgelagerten Teilen des Lenkparallelogramms L sowie des mit diesem verbundenen Furchenziehers 16 zusammenwirken. Aus der Draufsicht gemäß Fig. 5 wird (im Unterschied zur Seitenansicht gemäß Fig. 3) deutlich, dass die Gelenkpunkte 28', 31' der beiden Spreizschenkel 26, 27 mit einem Querabstand Q zu den Gelenkpunkten 28, 31 des Lenkparallelogramms L an der Querachse (41) vorgesehen sind. Denkbar ist auch, dass diese Gelenkpunkte in der aus Fig. 3 ersichtlichen Lage jeweils vereinigt werden.

Bei dem vorliegenden "doppelten" Viergelenk (ähnlich Fig. 3) bildet der lange Schenkel 26 des Y-Steuerteils 24 in einem auch den Furchenzieher 16 erfassenden Schwenkgelenk 28, 28' einen ersten Anlenkpunkt zum Lenkparallelogramm L, und der kürzere Schenkel 27 ist bei dieser Ausführung mit einem Spannschloss 29 gelenkig bei 30 verbunden, wobei anderenends des Spannschlosses 29 ein zweiter, oberhalb des Furchenziehers 16 befindlicher Gelenkpunkt 31, 31' des Lenkparallelogramms L gebildet wird.

Mit diesem Spannschloss 29, das auch durch ähnliche Spannverbinder ersetzbar ist, wird eine Einstellung der "Vorspannung" des gesamten Getriebezuges des Mehrhebel-Getriebes G möglich, wobei mit einem Pfeil P (Fig. 2) die veränderte Länge bzw. die Abstandsänderung zwischen den Gelenkpunkten 30 und 31 angedeutet ist. Das gesamte System G kann mit der vorliegenden Bauteilkombination so eingestellt werden, dass der Furchenzieher 16 und das Zudeckelement 17 im Verhältnis 1:1 bewegbar sind.

In Weiterführung dieses Getriebezuges (Fig. 3) ist vorgesehen, dass ausgehend von den beiden zentralen ersten Anlenkpunkten 28, 31 bzw. 28', 31' des Y-Steuerteils 24 das Lenkparallelogramm L mit zwei im wesentlichen konformen Längsstreben 32, 33 zu dem am Tragrahmen 2 gehaltenen Stützarm 25 geführt ist und hier zwei das Lenkparallelogramm L vervollständigende Lenkpunkte 34, 35 definiert werden. Mit Blick auf einen maximalen Einstell- und Schwenkbereich T bzw. T' - für zumindest den Furchenzieher 16 - ist vorgesehen, dass an Stelle denkbarer "gerader" Streben (nicht dargestellt) die optimierten Lenkstreben 32, 33 mit einer (gegensinnigen) S-Kontur versehen sind und damit der erreichbare "Freiheitsgrad" für die vorbeschriebene Gelenkkette optimal an die Einbaubedingungen angepasst ist.

Eine weitere Optimierung der Konstruktion im Bereich des Mehrhebel-Getriebes G sieht vor, dass der ein Loslager 36 im Bereich des Zudeckelementes 17 bildende Basisschenkel 37 für das Y-förmige Steuerteil 24 im Bereich des Zudeckelementes 17 bzw. dessen Träger 23 eine längsverschiebbare bzw. schwenkbare (Winkel W', Fig. 3) Abstützung bildet. In der dargestellten Ausführung ist diese "lose Abstützung" durch eine Auflage des Basisschenkels 37 auf einem der Führungsbolzen 38, 38' (Fig. 3, Fig. 4) verdeutlicht. Es versteht sich, dass zur Querkraftstabilisierung der Basisschenkel 37 zwischen zwei Führungsblechen 39, 39' o. dgl. Halteteile aufgenommen ist.

Zur Komplettierung des Getriebezuges im Bereich des Mehrhebel-Gestänges G, G' ist vorgesehen, dass im Bereich des die vier Gelenkpunkte 28, 31, 34, 35 aufweisenden Lenkparallelogrammes L ein Tragverbinder 40 die Hebelkonstruktion der Viergelenk-Kette vervollständigt. Dieser Tragverbinder 40 verläuft ausgehend von dem dem Furchenzieher 16 zugeordneten Anlenkpunkt 28 im wesentlichen vertikal und parallel zum vorderen Stützorgan 25, wobei am oberen Ende des Tragverbinders 40 der Gelenkpunkt 31 zum Bereich des Spannschlosses 29 hin erfasst wird.

Ausgehend von der vorbeschriebenen "eindimensionalen" Konstruktion des Mehrhebel-Gestänges G (Fig. 3) erfolgt eine Anpassung in Querrichtung der Maschine 1. Dabei ist vorgesehen, dass der Tragverbinder 40 zwischen seinen beiden Gelenkpunkten 28 und 31 einen Querträger 41 erfasst und dieser anderenends mit zumindest einem zweiten, insbesondere spiegelbildlich angeordneten Mehrhebel-Gestänge G' mit Y-förmigem Steuerteil 24' verbunden ist (Fig. 4). Damit wird deutlich, dass mittels der beiden parallelen Y-Steuerteile 24, 24' und den zugeordneten Bauteilen der Viergelenk-Kette eine weitgehend beliebige Anzahl von zwischen liegenden Furchenziehern 16 mit geringem Aufwand steuerbar ist.

Aus der Zusammenschau von Fig. 4 und Fig. 5 wird deutlich, dass die vorbeschriebene Abdeckbaugruppe eine zu einer Längsmittelebene M weitgehend symmetrische Ausführung aufweist, wobei ein zentraler Hauptlängsträger 42 zu dem das Zudeckelement 17 erfassenden Träger 23 geführt ist und dabei eine "Grundeinstellung" des Zudeckelementes 17 dadurch erfolgen kann, dass ein Stellorgan 43 so auf das Zudeckelement 17 wirkt, dass ein weitgehend konstanter Anpressdruck gemäß Pfeil D (Fig. 3) im Bereich des eine Dammhöhe H aufweisenden Kartoffeldamms vorliegt. Das Stellorgan 43 kann dabei beispielsweise in Form eines Hydraulikzylinders ausgeführt werden, der in einstellbarer Ausführung auf das Zudeckelement 17 in Form eines Dammformbleches drückt. Durch diesen - auf den gelockerten Boden (vorgeordnete Bodenbearbeitung bei BE, Fig. 2) wirkenden - Gegendruck wird eine konstante Dammhöhe H gewährleistet, woraus im Zusammenspiel mit dem Furchenzieher 16 die konstante Tiefe einer Knolle K im erzeugten Kartoffeldamm resultiert. Es versteht sich, dass diese "Grundeinstellung" der Baugruppen zueinander auch im Bereich des Furchenziehers 16 und der zugeordneten Lenkelemente möglich ist, wobei vorzugsweise das Spannschloss 29 genutzt werden kann. Durch eine Stellbewegung gemäß Pfeil S (Fig. 3) kann damit die jeweilige Eingriffstiefe des Furchenziehers 16 angepasst werden.

Die vorbeschriebene Konstruktion bildet mit dem zumindest einen elektronischen Sensor 21 und der mechanisch im Bereich des Spannschlosses 29 einstellbaren Lenker-Baueinheit G ein System mit Tiefenautomatik, derart, dass mittels einer effizienten, ausgehend vom Auflagebereich am Bolzen 38 mehrgliedrigen Gelenkkette mit den Punkten 28', 31', 28, 31, 34, 35 (und 30) eine vorgegebene Bearbeitungslage weitgehend "starr" eingehalten werden kann und dabei das Zusammenspiel von sensorischen Messgrößen und verlagerbaren Steuerteilen der Einheit G, G' eine effiziente Systemsicherung bewirkt. Damit wird einerseits im Bereich des Furchenziehers 16 z. B. die Steinsicherung verbessert, und andererseits kann im Bereich des als Dammformblech ausgebildeten Zudeckelementes 17 ein Zudeckvorgang mit einer optimalen Lage der bedeckten Knollen K' (Fig. 1) in Bezug auf das Boden- bzw. Dammniveau erreicht werden. Ebenso ist denkbar, dass die Messsignale des Sensors 21 an den Schlepper 4 übermittelt werden und von diesem aus eine Steuerbewegung insbesondere dann ausgelöst wird, wenn der Schlepper 4 in den Ackerboden einsinkt und damit der Verlegevorgang verändert wird.

Mit der erfindungsgemäßen Konstruktion wird ein durch die Drei-Punkt-Lagerung 38, 34, 35 variabel einstellbares und "frei schwingendes" System erreicht, in das eine Auslenksicherung am Furchenzieher 16, eine Tiefen-Voreinstellung 29, ein externes Steuerungsglied bei 21 und eine externe Flächenlastbeeinflussung bei 43 integriert sind, derart, dass die Lagetiefe der Knollen K weitgehend automatisch auf der optimalen Lage im Kartoffeldamm gehalten wird.

## Patentansprüche

1. Legemaschine für Kartoffeln, deren eine Einheit bildende Legebaugruppen an einem Tragrahmen (2) angreifen, wobei für einen zumindest einreihigen Legevorgang (R) ein mit einem oberen Vorratsbehälter (6) für Knollen (K) zusammenwirkendes Legeaggregat (7) vorgesehen ist, unterhalb diesem in Arbeitsrichtung (F) im wesentlichen hintereinander ein im Ackerboden ein Saatbeet (9) für die vereinzelten Knollen (K) erzeugender Furchenzieher (16) sowie zumindest ein Ackerboden auf eingelegte Knollen (K') häufendes Zudeckelement (17) vorgesehen sind, der Furchenzieher (16) mit dem Zudeckelement (17) eine gemeinsam verstellbare Abdeckbaugruppe bildet und diese mittels zumindest eines als Mehrhebel-Gestänge (G) ausgebildeten Verbindungsteils (18) steuerbar mit dem Tragrahmen (2) verbunden ist, **dadurch gekennzeichnet, dass** das Mehrhebel-Gestänge (G, G') als das Verbindungsteil (18) einen als Führungs- und Steuerteil wirksamen Strebenlenker (24, 24') aufweist, wobei dessen zwei jeweils einen nach vorn gerichteten Endpunkt (bei 28', 31') bildende Spreizschenkel (26, 27) und ein in Arbeitsrichtung (F) vorgelagertes Lenkparallelogramm (L) gemeinsam im Bereich eines Querträgers (41) auf den mit diesem verbundenen Furchenzieher (16) wirken.

2. Legemaschine nach Anspruch 1, **dadurch gekennzeichnet, dass** der Strebenlenker (24) im Bereich zumindest eines die Abdeckbaugruppe am Tragrahmen (2) haltenden Längstragrohres (20) mittels eines Basisschenkels (37) in die GestängeSteuerung integriert ist.

3. Legemaschine nach Anspruch 1 oder 2, **dadurch gekennzeichnet, dass** der oberseitig des Zudeckelementes (17) mit dem Basisschenkel (37) abstützbare und in Arbeitsrichtung (F) zum Furchenzieher (16) hin im wesentlichen Y-förmig verlaufende Strebenlenker (24) mit seinen vorderen zwei Endbereichen jeweilige Gelenkpunkte (28', 31') an der Querachse (41) bildet und an dieser das andererseits zum Tragrahmen (2) geführte vordere Lenkparallelogramm (L) mit einem Querabstand (Q) zum Strebenlenker (24) angeordnete Gelenkpunkte (28, 31) aufweist.

4. Legemaschine nach einem der Ansprüche 1 bis 3, **dadurch gekennzeichnet, dass** die ohne Stützräder gehaltene Maschine (1) insgesamt mittels eines am Tragrahmen (2) angreifenden Stellorgans (bei 3) auf eine konstante Lage zur Boden- bzw. Ackerfläche (B) einstellbar, zumindest mittels des Mehrhebel-Gestänges (G, G') der Furchenzieher (16) mit dem Zudeckelement (17) gemeinsam verlagerbar und/oder zumindest der Furchenzieher (16) als ein Teil der Abdeckbaugruppe einzeln verlagerbar ist/sind.

5. Legemaschine nach einem der Ansprüche 1 bis 4, **dadurch gekennzeichnet, dass** ausgehend vom Tragrahmen (2) an diesem mehrere gelenkig abgestützte und zur Abdeckbaugruppe gerichtete Längstragrohre (20, 20') vorgesehen sind und diese mit zwei zu einem zentralen Hauptlängsträger (42) parallel beabstandeten Y-Strebenlenkern (24) als jeweilige steuernde Verbindungsteile (18) zusammenwirken.

6. Legemaschine nach einem der Ansprüche 1 bis 5, **dadurch gekennzeichnet, dass** mittels eines die Zudeckelemente (17) ausgehend vom Hauptlängsträger (42) erfassenden Stellorgans (43) eine Grundeinstellung des Auspressdrucks (D) der Zudeckelemente (17) erfolgt.

7. Legemaschine nach einem der Ansprüche 1 bis 6, **dadurch gekennzeichnet, dass** deren horizontale Lage in Bezug zur Bodenoberfläche (B) mittels zumindest eines am Längstragrohr (20) vorgesehenen Sensors (21) erfassbar ist, mit dessen Ausgangssignal ein Stellorgan aktivierbar ist und die Baugruppen im Bereich des Mehrhebel-Gestänges (G) einstellbar sind.

8. Legemaschine nach einem der Ansprüche 1 bis 7, **dadurch gekennzeichnet, dass** im Bereich des Längstragrohres (20) ein Näherungssensor (22) vorgesehen ist, damit eine jeweilige Winkellage (W) des schwenkbar am Trägerrahmen (2) gehaltenen Längstragrohres (20) erfassbar ist und bei einer Sollmaß-Abweichung eine Nachstellbewegung im Bereich der Maschine (1) bzw. der gesamten Legebaugruppe und/oder im Bereich des Mehrhebel-Gestänges (G) ausführbar ist.

9. Legemaschine nach einem der Ansprüche 1 bis 8, **dadurch gekennzeichnet, dass** das Längstragrohr (20) zu einem das Zudeckelement (17) erfassenden Träger (23) gerichtet ist und in dessen Bereich das zum Furchenzieher (16) gerichtete Mehrhebel-Gestänge (G) abstützbar ist.

10. Legemaschine nach einem der Ansprüche 1 bis 9, **dadurch gekennzeichnet, dass** ein langer Schenkel (26) des Y-Strebenlenkers (24) in einem dem Furchenzieher (16) zugeordneten Schwenkgelenk (28') einen ersten Anlenkpunkt am Querträger (41) bildet und der kürzere Schenkel (27) des Y-Steuerteils mit einem Spannschloss (29) gelenkig (bei 30) verbunden ist, das anderenends oberhalb des Furchenziehers (16) einen zweiten Gelenkpunkt (31') am Querträger (41) bildet.

11. Legemaschine nach einem der Ansprüche 1 bis 10, **dadurch gekennzeichnet, dass** ausgehend von den beiden ersten Anlenkpunkten (28, 30) zum Y-Steuerteil (24) das Lenkparallelogramm (L) mit zwei im wesentlichen konformen Längsstreben (32, 33) zu einem am Tragrahmen (2) gehaltenen Stützarm (25) geführt ist und hier zwei das Lenkparallelogramm (L) vervollständigende Lenkpunkte (34, 35) definiert sind.

12. Legemaschine nach einem der Ansprüche 1 bis 11, **dadurch gekennzeichnet, dass** der ein Loslager bildende Basisschenkel (37) des Y-förmigen Steuerteils (24) im Bereich des Dammformbleches (33) bzw. dessen Trägers (23) längsverschiebbar und schwenkbar mit einem Führungsbolzen (38, 38') zusammenwirkt.

13. Legemaschine nach einem der Ansprüche 1 bis 12, **dadurch gekennzeichnet, dass** im Bereich des die vier Gelenkpunkte (28, 31, 34, 35) aufweisenden Lenkparallelogramms (L) ausgehend von dem dem Furchenzieher (16) zugeordneten Anlenkpunkt (28) ein im wesentlichen vertikal und parallel zum vorderen Stützarm (25) verlaufender Tragverbinder (40) vorgesehen ist, der anderenends dem Gelenkpunkt (30) im Bereich des Spannschlosses (29) zugeordnet ist.

14. Legemaschine nach Anspruch 13, **dadurch gekennzeichnet, dass** der Tragverbinder (40) zwischen seinen beiden Gelenkpunkten (28, 31) den Querträger (41) erfasst, der in Querrichtung der Maschine (1) anderenends mit zumindest dem zweiten Y-förmigen Steuerteil (24') verbunden ist, derart, dass zwischen liegend mehrere Furchenzieher (16) mittels der beiden parallelen Y-Steuerteile (24, 24') bzw. der beiden Mehrhebel-Gestänge (G, G') schwenkbar bzw. steuerbar sind.

## Claims

1. Planting machine for potatoes, the planting modules of which machine, forming a unit, engage on a support frame (2), wherein a planting assembly (7) that interacts with an upper supply container (6) for tubers (K) is provided for an at least one-row planting process (R), below which assembly a furrow opener (16) that produces a seed bed (9) for the separated tubers (K) and a covering element (17) that heaps field soil onto planted tubers (K') are provided, essentially one behind the other in the work direction (F), the furrow opener (16) and the covering element (17) form a common, adjustable covering module, and this module is connected with the support frame (2), in controllable manner, by means of at least one connection part (18), configured as a multi-lever linkage (G), **characterized in that** the multi-lever linkage (G, G'), as the connection part (18), has a strut control arm (24, 24') that acts as a guide and control part, wherein the two expansion legs (26, 27) of this arm, which form an end point (at 28', 31') that is directed forward, in each instance, and a steering parallelogram (L) that is placed ahead in the work direction (F) jointly act on the furrow opener (16), in the region of a transverse support (41) that is connected with the latter.

2. Planting machine according to claim 1, **characterized in that** the strut control arm (24) is integrated into the linkage control in the region of at least one longitudinal support tube (20) that holds the covering module on the support frame (2), by means of a base leg (37).

3. Planting machine according to claim 1 or 2, **characterized in that** the strut control arm (24) that can be supported by the base leg (37) at the top of the covering element (17) and runs essentially in Y shape in the work direction (F), relative to the furrow opener (16), forms articulation points (28', 31') on the transverse axle (41) with its front end regions, in each instance, and that on this axle, the front steering parallelogram (L), which is passed to the support frame (2), on the other hand, has articulation points (28, 31) disposed at a transverse distance (Q) from the strut control arm (24).

4. Planting machine according to one of claims 1 to 3, **characterized in that** the machine (1), which is held without support wheels, can be adjusted as a whole, by means of an adjustment element (at 3) that engages on the support frame (2), to a constant position relative to the ground or field surface (B), and that the furrow opener (16) is jointly displaceable with the covering element (17), by means of the multi-lever linkage (G, G'), and/or at least the furrow opener (16) is individually displaceable as part of the covering module.

5. Planting machine according to one of claims 1 to 4, **characterized in that** proceeding from the support frame (2), multiple longitudinal support tubes (20, 20') supported on the frame in articulated manner and directed toward the covering module are provided, and that these interact with two Y-strut control arms spaced apart and parallel to a central main longitudinal support (42), as the controlling connection parts (18), in each instance.

6. Planting machine according to one of claims 1 to 5, **characterized in that** a basic setting of the ejection pressure (D) of the covering elements (17) takes place by means of a setting element (43) that detects the covering elements (17), proceeding from the main longitudinal support (42).

7. Planting machine according to one of claims 1 to 6, **characterized in that** its horizontal position with reference to the ground surface (B) can be detected by means of at least one sensor (21) provided on the longitudinal support tube (20), the output signal of which sensor can activate a setting element, and can adjust the modules in the region of the multi-lever linkage (G).

8. Planting machine according to one of claims 1 to 7, **characterized in that** an approximation sensor (22) is provided in the region of the longitudinal support tube (20), so that an angular position (W) of the longitudinal support tube (20), in each instance, which is held on the support frame (2) so as to pivot, can be detected, and in the event of a deviation from the reference value, a re-setting movement can be performed in the region of the machine (1) or of the entire planting module and/or in the region of the multi-lever linkage (G).

9. Planting machine according to one of claims 1 to 8, **characterized in that** the longitudinal support tube (20) is directed toward a support (23) that engages on the covering element (17), and that the multi-lever linkage (G) directed toward the furrow opener (16) can be supported in the region of this support.

10. Planting machine according to one of claims I to 9, **characterized in that** a long leg (26) of the Y-strut control arm (24) forms a first articulation point on the transverse support (41) at a pivot joint (28') that is assigned to the furrow opener (16), and that the shorter leg (27) of the Y-control part is connected, at the other end, in articulated manner, with a turnbuckle (29) (at 30), which forms a second articulation point (31') on the transverse support (41) above the furrow opener (16).

11. Planting machine according to one of claims I to 10, **characterized in that** proceeding from the two first articulation points (28, 31) to the Y-control part, the steering parallelogram (L) is guided to a support arm (25) held on the support frame (2), with two essentially conforming longitudinal struts (32, 33), and here two steering points (34, 35) that complete the steering parallelogram (L) are defined.

12. Planting machine according to one of claims 1 to 11, **characterized in that** the base leg (37) of the Y-shaped control part (24), which leg forms a floating bearing, interacts with a guide bolt (38, 38'), in longitudinally displaceable and pivoting manner, in the region of the shaping board (33) or its support (23).

13. Planting machine according to one of claims 1 to 12, **characterized in that** in the region of the steering parallelogram (L) that has the four articulation points (28, 31, 34, 35), proceeding from the articulation point (28) assigned to the furrow opener (16), a support connector (40) that runs essentially vertically and parallel to the front support arm (25) is provided, which connector is assigned, at the other end, to the articulation point (30) in the region of the turnbuckle (29).

14. Planting machine according to claim 13, **characterized in that** the support connector (40) engages, between its two articulation points (28, 31), on the transverse support (41), which is connected at the other end, in the transverse direction of the machine (1), with at least the second Y-shaped control part (24'), in such a manner that multiple furrow openers (16) that lie in between can be pivoted or controlled by means of the two parallel Y-control parts (24, 24') or the two multi-lever linkages (G, G').

## Revendications

1. Machine pour planter des pommes de terre, dont les éléments de montage pour la plantation, formant un ensemble, sont en prise sur un cadre support (2), au moins un organe de plantation (7), comprenant un conteneur de réserve (6) supérieur pour des tubercules (K), agissant conjointement avec l'organe, étant prévu pour une opération de plantation (R) en une rangée, organe en dessous duquel, dans la direction de travail (F), un butoir (16), générant principalement un lit de semences (9) pour les tubercules (K) individuels, les uns derrière les autres, dans le sol du champ, ainsi qu'au moins un élément pour le recouvrement (17) formant des buttes sur les tubercules (K') déposés dans le sol du champ, étant prévus, le butoir (16) formant avec l'élément pour le recouvrement (17) un ensemble de recouvrement, pouvant être réglé de manière commune, et celui-ci étant relié avec le cadre support (2) au moyen d'une pièce de liaison (18) formée par au moins une armature à plusieurs niveaux (G), pouvant être réglée, **caractérisée en ce que** l'armature à plusieurs niveaux (G, G') ainsi que la pièce de liaison (18), présentent un guide d'arc-boutant (24, 24'), agissant en tant que pièce de guidage et de commande, dont, chaque fois, deux ailettes d'expansion (26, 27), formant un point d'arrivée (près de 28', 31'), orienté vers l'avant, et un parallélogramme de commande (L), logé préalablement dans la direction du travail (F), agissent ensemble, dans la zone d'un support transversal (41), sur le butoir (16) qui lui est relié.

2. Machine pour planter selon la revendication 1 **caractérisée en ce que** le guide d'arcboutant (24) est intégré dans la commande de l'armature, au moins dans la zone d'une tige support (20) longitudinale supportant un ensemble pour le recouvrement sur le cadre support (2), au moyen d'une ailette de base (37).

3. Machine pour planter selon les revendications 1 ou 2 **caractérisée en ce que** le guide d'arc-boutant (24), pouvant s'appuyer avec l'ailette de base (37) sur la partie supérieure de l'élément pour le recouvrement (17), et s'étendant dans la direction de travail (F) en forme de Y, principalement par rapport au butoir (16), forme des points d'articulation (28', 31'), chaque fois avec ses deux zones d'extrémité antérieures, sur l'axe transversal (41) et présente des points d'articulation (28, 31) disposés sur l'axe à l'opposé du cadre support (2), guidés par un parallélogramme de guidage (L) avec un espace transversal (Q) par rapport au guide d'arc-boutant (24).

4. Machine pour planter selon l'une quelconque des revendications 1 à 3 **caractérisée en ce que** la machine (1), soutenue sans roues d'appui, peut être réglée totalement dans une position constante par rapport à la surface du sol, respectivement par rapport à la surface du champ (B), au moyen d'un organe de réglage (près de 3), étant en prise sur le cadre support (2), le butoir (16) pouvant être déplacé ensemble avec l'élément pour le recouvrement (17) comme une partie de l'ensemble pour le recouvrement, et/ou au moins le butoir (16) peut être déplacé individuellement comme une partie d'élément de montage pour le recouvrement au moyen de l'armature à plusieurs niveaux (G, G').

5. Machine pour planter selon l'une quelconque des revendications 1 à 4 **caractérisée en ce qu'**en partant du cadre support (2), plusieurs tiges supports longitudinales (20, 20'), s'appuyant de manière articulée sur le cadre support, et orientées dans le sens de l'élément de montage pour le recouvrement sont prévues et que celles-ci agissent conjointement avec deux guides d'arc-boutant en forme d'Y (24), espacés, parallèles par rapport à un support longitudinal principal (42) central, en tant que pièces de liaison (18) de réglage.

6. Machine pour planter selon l'une quelconque des revendications 1 à 5 **caractérisée en ce qu'**un réglage d'origine de la pression d'expulsion (D) des éléments pour le recouvrement (17) se produit au moyen d'un organe de réglage (43) saisissant le support principal longitudinal (42) en partant des éléments pour le recouvrement (17).

7. Machine pour planter selon l'une quelconque des revendications 1 à 6 **caractérisée en ce que** sa position horizontale par rapport à la surface du sol (B) peut être déterminée au moyen d'au moins un capteur (21), prévu sur la tige support longitudinale (20), capteur dont le signal de sortie peut activer un organe de réglage et peut mettre en oeuvre les éléments de montage dans la zone de l'armature à plusieurs niveaux (G).

8. Machine pour planter selon l'une quelconque des revendications 1 à 7 **caractérisée en ce que**, dans la zone de la tige support longitudinale (20), un capteur de rapprochement (22) est prévu, grâce auquel une position angulaire (W) quelconque de la tige support longitudinale (20), retenue, en pouvant pivoter sur le cadre support (2), peut être déterminée et peut exécuter, pour une déviation d'une valeur de référence, un mouvement de rajustement dans la zone de la machine (1), respectivement de tout l'élément de montage pour la plantation, et/ou dans la zone de l'armature à plusieurs niveaux (G).

9. Machine pour planter selon l'une quelconque des revendications 1 à 8 **caractérisée en ce que** la tige support longitudinale (20) est orientée vers un support (23) comprenant l'élément pour le recouvrement (17) et dont la partie qui est orientée vers le butoir (16) peut être appuyée sur l'armature à plusieurs niveaux (G).

10. Machine pour planter selon l'une quelconque des revendications 1 à 9 **caractérisée en ce qu'**une ailette longue (26) du Y du guide d'arcboutant (24) forme un premier point d'articulation sur le support transversal (41) sur une articulation de pivotement (28') disposée sur le butoir (16) et qu'une ailette plus courte (27) de l'Y de la partie de commande est reliée par une articulation (près de 30) avec une tendeur (29), qui forme à l'autre extrémité au dessus du butoir (16) un deuxième point d'articulation (31') sur le support transversal (41).

11. Machine pour planter selon l'une quelconque des revendications 1 à 10 **caractérisée en ce qu'**en partant des deux premiers points d'articulations (28, 30) jusqu'à la partie de commande en Y (24), le parallélogramme de commande (L) est emmené par deux arcs boutants longitudinaux (32, 33), dans l'ensemble conformes, vers un bras support (25) maintenu sur le cadre support (2), et deux points de commande (34, 35), complétant le parallélogramme de commande (L), étant définis à cet endroit.

12. Machine pour planter selon l'une quelconque des revendications 1 à 11 **caractérisée en ce que** l'ailette de base (37) formant un palier libre de la partie de commande (24) en forme d'Y agit conjointement avec un piston de guidage (38, 38') en pouvant être déplacée longitudinalement dans la zone de la tôle de formation d'une butte (33), respectivement, de son support (23), et en pouvant être pivotée.

13. Machine pour planter selon l'une quelconque des revendications 1 à 12 **caractérisée en ce que** dans la zone du parallélogramme de guidage (L) formé par les quatre points d'articulation (28, 31, 34, 35), un connecteur de maintien (40), s'étendant dans l'ensemble verticalement en partant du point d'articulation (28) alloué au butoir (16), et parallèlement au bras de soutien (25) avant, est prévu, qui est adjoint à l'autre extrémité au point d'articulation (30) dans la zone du tendeur (29).

14. Machine pour planter selon la revendication 13 **caractérisée en ce que** le connecteur de maintien (40) est en prise avec le support transversal (41) entre ses deux points d'articulation (28, 31), le support transversal est maintenu dans la direction transversale de la machine (1) à l'autre extrémité avec au moins la deuxième partie de commande (24') en forme d'Y de sorte que plusieurs butoirs logés entre peuvent être pivotés, respectivement, peuvent être commandés, au moyen des deux parties de commande en Y (24, 24') parallèles, respectivement, des deux armatures à plusieurs niveaux (G, G').
